# EUROPEAN PATENT SPECIFICATION

(11) **EP 0 392 775 B1**
(45) Date of publication and mention of the grant of the patent: **06.09.1995**
(21) Application number: 90303786.9
(22) Date of filing: 09.04.1990
(51) Int. Cl.: G11B 7/09

(54) **A detrack detecting system in an optical recording/reproducing apparatus**
System zur Anmeldung eines Spurfolgefehlers in einem optischen Aufnahme-/Wiedergabegerät
Système pour la détection d'erreur de suivi de piste dans un appareil d'enregistrement/reproduction optique

(30) Priority: 14.04.1989 JP 93028/89
(43) Date of publication of application: 17.10.1990
(73) Proprietor: SONY CORPORATION, Tokyo 141 (JP)
(72) Inventor: Wachi, Shigeaki, c/o Sony Corporation, Tokyo (JP)
(74) Representative: Ayers, Martyn Lewis Stanley

(56) References cited:
- EP-A- 0 095 766
- US-A- 4 669 072

## Description

The present invention relates to a detrack detecting system for detecting deviation of the beam spot from the track in an optical recording/reproducing apparatus in which recording and reproduction of data are performed by irradiating an optical beam onto an optical disc.

There has been put into practice use an optical disc in which the recording medium of its recording surface is such that its reflectance changes in response to light, thereby enabling information to be recorded and reproduced.

EP-A-0095766 is an example of an apparatus corresponding to the pre-characterising part of claim 1.

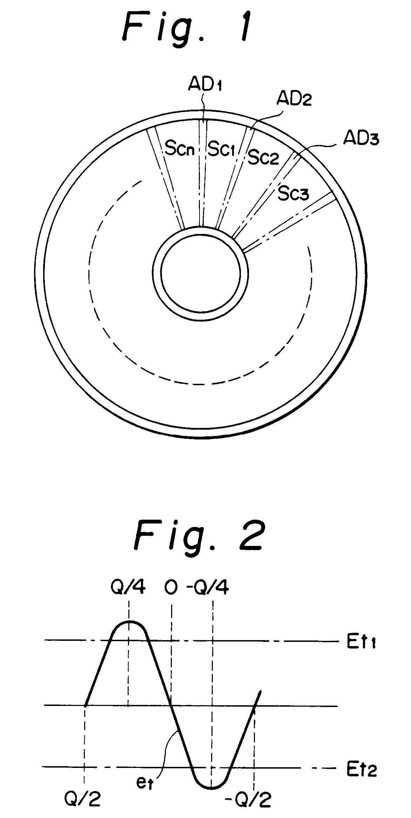

In a writable optical disc, for instance, as shown in figure 1 of the accompanying drawings, a spiral track is divided into n sectors S_{C1}, S_{c2}, S_{c3}, ..., S_{cn} and address areas Ad₁, AD₂, AD₃, ... in which track address data is recorded, are formed in the leading portion of each sector. A laser beam modulated by recording data is irradiated onto the data recording areas of the sectors S_{c1}, S_{c2}, S_{c3,}..., so that the temperature of that portion rapidly rises and recording dots are formed onto the disc surface. By irradiating the disc with a laser beam which is of lower intensity than that used for recording, the recorded data can be read out without destroying the recording dots.

The laser beam which is irradiated onto the optical disc is controlled in a manner such that, in the recording and erasing modes, the laser power which is supplied is a few times larger than that in the reading mode. Therefore, when a strong vibration is applied to the erasing mode and the tracking servo is thereby made inoperative, a serious accident may result from the laser beam irradiating the wrong area of the disc, ie, data which has already been written may be destroyed or data may be written to the wrong track on the optical disc.

Therefore, as shown in figure 2, there is considered a method whereby the amplitude of a tracking error signal which is obtained from the reflected light of the beam spot which was irradiated onto the optical disc is compared with reference levels Et₁ and Et₂. When the tracking error signal outside the reference levels is output, it is regarded that the optical recording/ reproducing apparatus is in a detracking state and this state is detected in the recording mode, the writing mode is cancelled at this time point so that erroneous recording or erroneous erasure of data is prevented.

However, in the detrack detecting system as described above, since the level of tracking error signal changes depending on the kind of optical disc or the reflectance of the optical disc, there arises a problem that even if the tracking error signal level is compared with the reference levels, it is difficult to detect accurately that a detrack condition exists.

It is an object of the present invention to provide a detrack detecting system in an optical recording/reproducing apparatus which can accurately detect the detracking state even in the case where the reflectances of the optical discs are different.

According to the present invention there is provided a detrack detecting system in an optical recording/reproducing apparatus in which recording and reproducing of data are performed by irradiating beam spots onto an optical disc, comprising:
means for irradiating the disc with a first beam spot which follows the centre of a data recording track;
means for irradiating the disc with second and third beam spots at positions which are shifted laterally of the track from the first beam spot by a predetermined distance to the inner circumferential side and the outer circumferential side of the track respectively; and
first, second and third photodetectors for detecting light reflected from the first, second and third beam spots, respectively;
characterised by means for deriving first, second and third tracking error signals from the first, second and third photodetectors respectively;
means for adding the first and second tracking error signals and for adding the first and third tracking error signals to form first and second composite tracking error signals, respectively; and
means for detecting the detracking state, in which the first beam spot is deviated from the track, based on the polarities of the first and second composite tracking error signals.

The invention will be further described by way of non-limitative example with reference to the accompanying drawings, in which:-
Figure 1 is an explanatory diagram of a writable optical disc;
Figure 2 is an explanatory diagram of tracking error signals;
Figure 3 is a block diagram showing an embodiment of the present invention;
Figure 4 is an explanatory diagram of beam irradiating positions;
Figure 5 is an explanatory diagram of phase differences among three tracking error signals;
Figure 6 is an explanatory diagram of composite tracking error signals;
Figure 7 is a waveform diagram for explaining detrack signals;
Figure 8 is an explanatory diagram of beam irradiating positions in another embodiment of the present invention;
Figure 9 is an explanatory diagram of phase differences among these tracking error signals in another embodiment; and
Figure 10 is an explanatory diagram of composite tracking error signals in another embodiment.

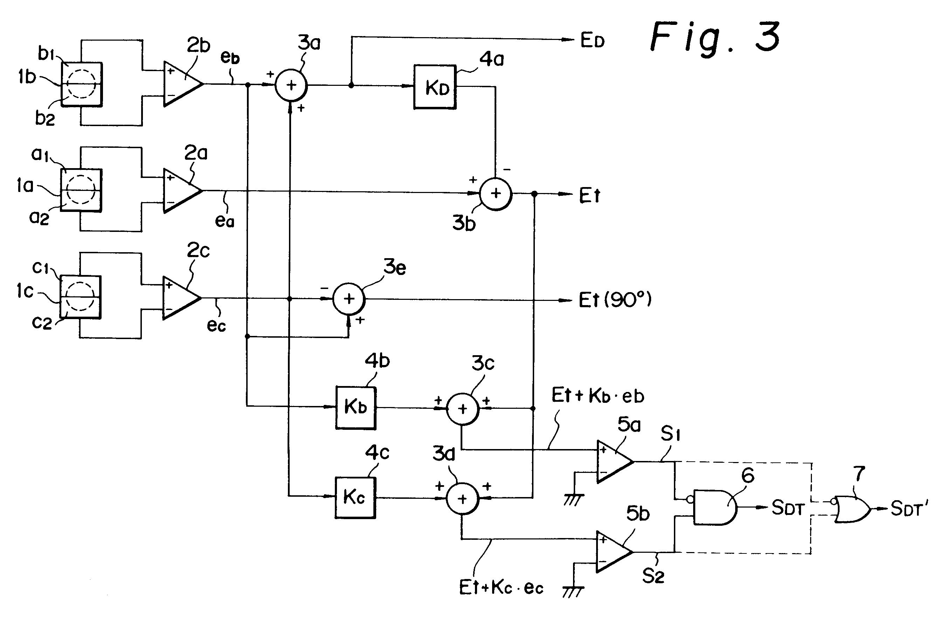

Figure 3 shows a schematic block diagram of a detrack detecting system of an optical recording/reproducing apparatus of the present invention.

In figure 3, reference numerals 1a, 1b and 1c respectively denote detectors to which the reflected light of the first, second and third beam spots which were irradiated onto an optical disc are input. Each of the detectors 1a-1c is divided into two sensitive areas (eg, a₁, a₂ in the case of detector 1a) which produce independent outputs according to the detected intensity of the reflect light. Reference numerals 2a, 2b and 2c indicate comparing circuits which calculate the difference between the signals which are output from photosensitive surfaces a₁-a₂, b₁-b₂ and c₁-c₂ of the detectors 1a, 1b and 1c respectively; 3a, 3b, 3c, 3d and 3e represent adding circuits; and 4a, 4b and 4c denote coefficient circuits.

As will be explained hereinlater, reference numerals 5a, 5b and 6 denote 0-level comparators and a logic circuit for discriminating the polarities of composite tracking error signals and detecting the detracking state.

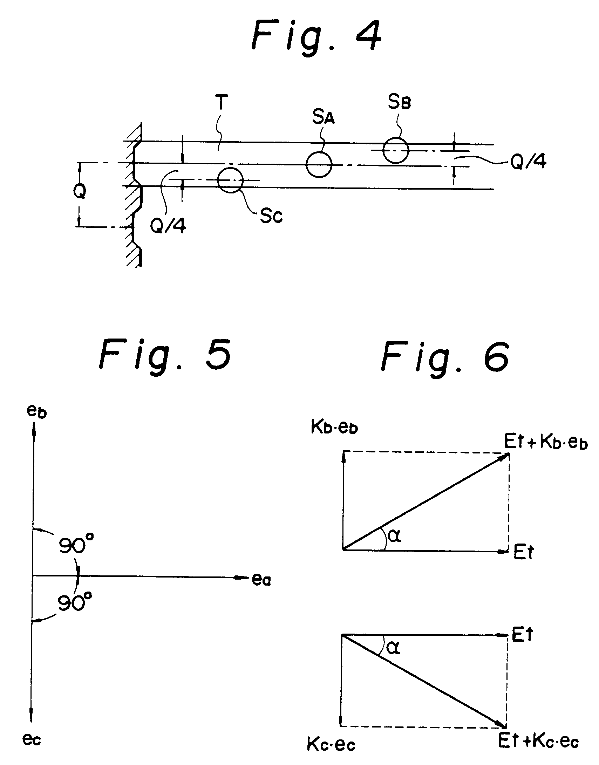

Figure 4 shows the positions of the beam spots irradiated onto the optical disc. The three beam spots are irradiated in a manner such that the first beam spot S_{A} is located on a track T of the optical disc and the second and third beam spots S_{B} and S_{C} are located so as to be shifted laterally of the track from the first beam spot S_{A} by a 1/4 track pitch, to the inner circumferential side and the outer circumferential side radially of the optical disc, respectively.

Therefore, for example, when the three beam spots S_{A}, S_{B} and S_{C} are traversed in the radial direction of the optical disc, the phases of the tracking error signals which are obtained at this time are set such that tracking error signals e_{b} and e_{c} which are obtained from the second and third detectors 1b and 1c have a phase difference of 90° for a tracking error signal eₐ which is output from the first detector 1a as shown in fig 5.

Accordingly, when the tracking error signals e_{b} and e_{c} which are obtained from the second the third detectors 1b and 1c are supplied to the adding circuit 3a and are added, the tracking error signal component is set to 0. However, a DC component E_{D} which is output due to the skew of the optical disc and the optical offset is detected.

The DC component E_{D} is multiplied with a coefficient K_{D} by the coefficient circuit 4a and is input to the second adding circuit 3b. In the adding circuit 3b, the DC component included in the tracking error signal eₐ obtained from the first detector 1a is cancelled, thereby forming a tracking error signal Et without an offset.

The tracking error signal Et and the signals which are obtained by multiplying coefficients K_{b} and K_{c} to the tracking error signals e_{b} and e_{c} are respectively added by the adding circuits 3c and 3d. Thus, as shown in the vector diagram of fig 6, composite tracking error signals (Et + e_{b} ·K_{b} and (Et + e_{c}·K_{c}) are formed. The detracking state can be detected from these composite tracking error signals by suitable processing.

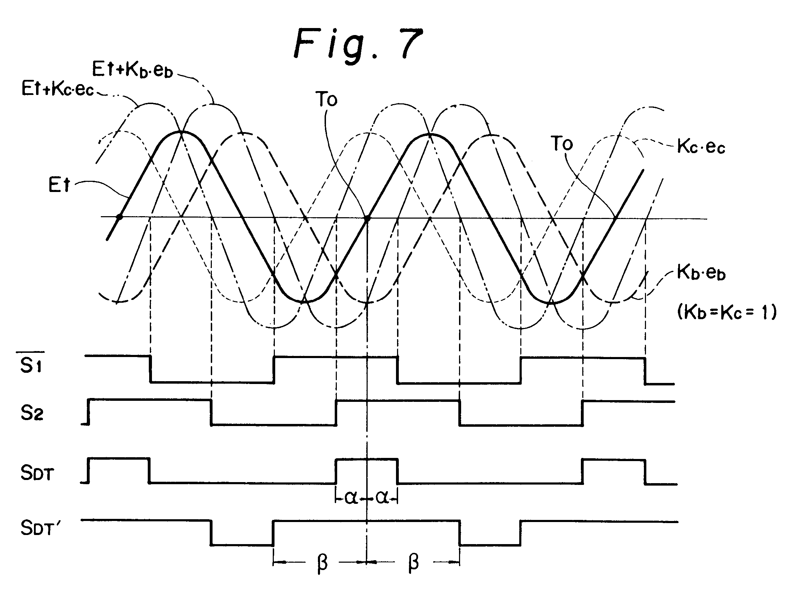

For example, as shown in fig 7, the composite tracking error signals (Et + e_{b} ·K_{b}) and (Et + e_{c} ·K_{c}) are respectively input to the comparators 5a and 5b. Waveforms S₁ and S₂ which are inverted at zero-cross points are generated. When those waveforms are supplied to the AND gate 6 whose one input terminal is used as a negative logic input, an S_{DT} signal is output from the AND gate 6.

Since the output S_{DT} is set to the H level at positions before and after (a range of ±α) of an on-track point Tₒ of the tracking error signal, when the output S_{DT} of the AND gate 6 is set to the L level, such a state can be taken to be a detracking state.

The on-track range, namely, the range (±α) which is regarded as a state in which the tracking servo is being correctly executed can be determined by the values of the coefficient values K_{b} and K_{c} which are multiplied to the second and third tracking error signals e_{b} and e_{c} in fig 3. When K_{b} = K_{c} = 1, if the beam spot were deviated from the centre point of the track by one ±45°, the servo is taken to be in a detracking state. As the values of K_{b} and K_{c} are large, the discriminating range of the on-track is widened.

In fig 3, as shown by the broken line, by supplying the outputs S₁ and S₂ of the comparators 5a and 5b to an OR gate 7 one of whose input terminals is used as a negative logic input, it is possible to obtain a signal S_{DT}′ in which a range of ±β (β=180° - α) from the track point Tₒ can be taken is indicating the on-tracking state.

On the other hand, by adding the tracking error signals e_{b} and e_{c} which are obtained from the second and third detectors 1b and 1c by the adding circuit 3e, a tracking error signal Et (90°) whose phase is shifted by 90° can be obtained. By using this tracking error signal, the direction of movement of the optical head can be detected.

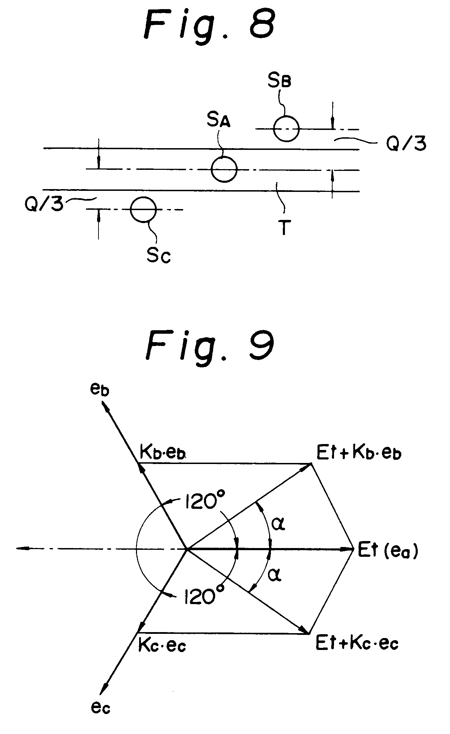

Fig 8 shows irradiating positions of beam spots showing another embodiment of the invention. In the embodiment, the second and third beam spots S_{B} and S_{C} are arranged so as to be shifted laterally of the track from the first beam spot S_{A} by 1/3 track pitch, respectively. Therefore, in this case, as shown in the vector diagram of fig 9, three tracking error signals eₐ (Et), e_{b} and e_{c} having phase differences of 120° are generated.

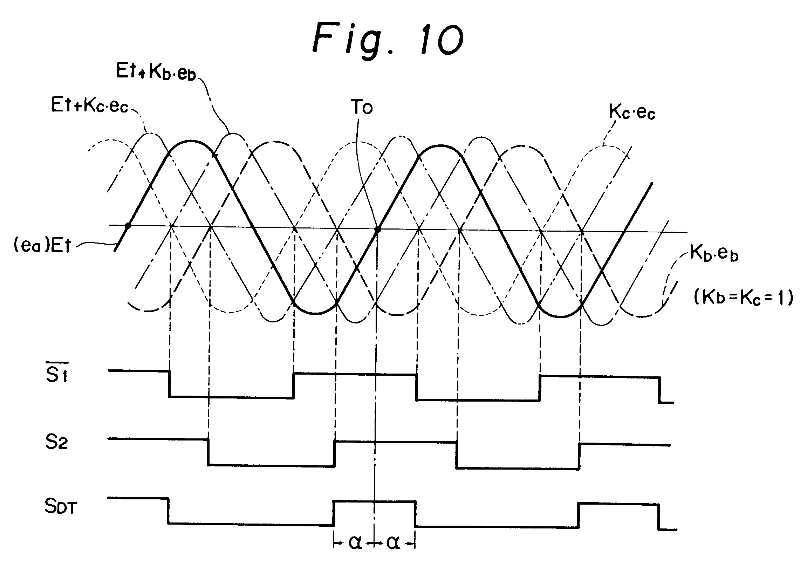

Fig 10 shows phase waveforms of traverse signal of the three tracking error signals and composite tracking error signals.

In the case of the embodiment as well, the composite tracking error signals (Et + e_{b} ·K_{b}) and (Et + e_{c}·K_{c}) are input to the comparators 5a and 5b and the detrack detection signal S_{DT} can be obtained from the AND gate 6 by the system as mentioned above.

In the case of the embodiment, when the coefficient values K_{b} and K_{c} are set to 1, the on-track range (±α) is set to ±60° and as the coefficient values are small, the discriminating range of the on-track is narrowed.

As described above, according to the detrack detecting system of the invention, three beam spots are irradiated onto the optical disc, the polarities of the tracking error signals which are obtained from the three beam spots are discriminated by the logic circuit and the like, and the detracking state is thereby detected. Therefore, the system can be used with optical discs having different reflectances or where the kinds of recording media provided on the recording surfaces of the optical discs differ and the detracking state can still be accurately detected.

## Claims

1. A detrack detecting system in an optical recording/reproducing apparatus in which recording and reproducing of data are performed by irradiating beam spots onto an optical disc, comprising:
means for irradiating the disc with a first beam spot (SA) which follows the centre of a data recording track;
means for irradiating the disc with second and third beam spots (S_{B},S_{C}) at positions which are shifted laterally of the track from the first beam spot by a predetermined distance to the inner circumferential side and the outer circumferential side of the track respectively; and
first, second and third photodetectors (1a,1b,1c) for detecting light reflected from the first, second and third beam spots, respectively;
characterised by means (3a,4a,3b,4b,4c) for deriving first, second and third tracking error signals from the first, second and third photodetectors respectively;
means (3c,3d) for adding the first and second tracking error signals and for adding the first and third tracking error signals to form first and second composite tracking error signals, respectively; and
means (5a,5b,6) for detecting the detracking state, in which the first beam spot is deviated from the track, based on the polarities of the first and second composite tracking error signals.

2. A detrack detecting system according to claim 1, wherein the second and third beam spots are irradiated at positions which are shifted from the first beam spot by a 1/4 track pitch.

3. A detrack detecting system according to claim 2, wherein means (3a,4a,3b) are provided to eliminate a DC component included in the first tracking error signal by adding the second tracking error signal and the third tracking error signal and subtracting a signal obtained by multiplying by a predetermined coefficient the resulting signal from the first tracking error signal.

4. A detrack detecting system according to claim 1, wherein the second and third beam spots are irradiated at positions which are away from the first beam spot by a 1/3 track pitch.

5. A detrack detecting system according to any one of the preceding claims, wherein the deriving means includes means (4a,4b,4c) for multiplying, by respective predetermined coefficients, the second and third tracking error signals and the first tracking error signal.

6. A detrack detecting system according to any one of the preceding claims, the detecting means detects the polarities of the first and second composite tracking error signals by producing respective detection signals by detecting zero-crossing points of the first and second composite tracking error signals respectively logically AND-ing one of the detection signals with the logical inverse of the other.

7. A detrack detecting system according to any one of the preceding claims, wherein, the detecting means detects polarities of the first and second composite tracking error signals by producing respective detection signals by detecting zero-cross points of the first and second composite tracking error signals respectively and logically OR-ing one of the detection signals with the logical inverse of the other.

8. A detrack detecting system according to any one of the preceding claims, wherein, in use, the moving direction of the beam spot is detected by subtracting the second and third tracking error signals.

9. A detrack detecting system according to any one of the preceding claims and including means for inhibiting writing operations to the disc while a detracking condition is detected.

## Patentansprüche

1. System zur Detektierung einer Spurabweichung in einem optischen Aufnahme/Wiedergabegerät, bei dem die Aufzeichnung und Wiedergabe von Daten durch Bestrahlen einer optischen Platte mit Strahlpunkten erfolgen,
mit einer Einrichtung zum Bestrahlen der Platte mit einem ersten Strahlpunkt (SA), der dem Zentrum einer Datenaufzeichnungsspur folgt,
mit einer Einrichtung zum Bestrahlen der Platte mit einem zweiten und einem dritten Strahlpunkt (SB, SC) an Positionen, die gegenüber dem ersten Strahlpunkt um einen vorbestimmten Abstand zur inneren bzw. zur äußeren Umfangsseite der Spur hin seitlich versetzt sind,
mit einem erstem, einem zweiten und einem dritten Fotodetektor (1a, 1b, 1c) zur Detektierung des reflektierten Lichts des ersten, zweiten bzw. dritten Strahlpunkts,
**gekennzeichnet durch**
eine Einrichtung (3a, 4a, 3b, 4b, 4c) zur Ableitung eines ersten, eines zweiten und eines dritten Spurfehlersignals aus dem ersten, dem zweiten bzw. dem dritten Fotodetektor.
eine Einrichtung (3c, 3d) zum Addieren des ersten und des zweiten Spurfehlersignals und zum Addieren des ersten und dritten Spurfehlersignals, um ein erstes bzw. ein zweites zusammengesetztes Spurfehlersignal zu bilden,
und eine Detektoreinrichtung (5a, 5b, 6) zur Detektierung des Spurabweichungszustands, in dem der erste Strahlpunkt von der Spur abweicht, auf der Basis der Polaritäten des ersten und des zweiten zusammengesetzten Spurfehlersignals.

2. System zur Detektierung einer Spurabweichung nach Anspruch 1, bei dem der zweite und der dritte Strahlpunkt an Positionen auftreffen, die gegenüber dem ersten Strahlpunkt um ein Viertel des Spurabstands versetzt sind.

3. System zur Detektierung einer Spurabweichung nach Anspruch 2, bei dem Mittel (3a, 4a, 3b) vorgesehen sind zur Eliminierung einer Gleichstromkompente in dem ersten Spurfehlersignal durch Addieren des zweiten Spurfehlersignals und des dritten Spurfehlersignals und Subtrahieren eines Signals, das durch Multiplizieren des resultierenden Signals mit einem vorbestimmten Koeffizienten gewonnen wird, von dem ersten Spurfehlersignal.

4. System zur Detektierung einer Spurabweichung nach Anspruch 1, bei dem der zweite und der dritte Strahlpunkt an Positionen aufgestrahlt werden, die von dem ersten Strahlpunkt um ein Drittel des Spurabstands entfernt sind.

5. System zur Detektierung einer Spurabweichung nach einem der vorhergehenden Ansprüche, bei dem die Einrichtung zur Ableitung der Spurfehlersignale Mittel (4a, 4b, 4c) zum Multiplizieren des zweiten und dritten Spurfehlersignals und des ersten Spurfehlersignals mit jeweiligen vorbestimmten Koeffizienten aufweist.

6. System zur Detektierung einer Spurabweichung nach einem der vorhergehenden Ansprüche, bei dem die Detektoreinrichtung die Polaritäten des ersten und des zweiten zusammengesetzten Spurfehlersignals durch Erzeugen entsprechender Detektorsignale durch Detektierung der Nulldurchgangspunkte des ersten bzw. des zweiten zusammengesetzten Spurfehlersignals und durch logische UND-Verknüpfung eines der Detektorsignale mit der logischen Invertierten des anderen Detektorsignals detektiert.

7. System zur Detektierung einer Spurabweichung nach einem der vorhergehenden Ansprüche, bei dem die Detektoreinrichtung die Polaritäten des ersten und des zweiten zusammengesetzten Spurfehlersignals durch Erzeugen entsprechenden Detektorsignale durch Detektierung der Nulldurchgangspunkte des ersten bzw. des zweiten zusammengesetzten Spurfehlersignals und durch logische ODER-Verknüpfung eines der Detektorsignale mit der logischen Invertierten des anderen Detektorsignals detektiert.

8. System zur Detektierung einer Spurabweichung nach einem der vorhergehenden Ansprüche, bei dem während des Betriebs die Bewegungsrichtung des Strahlpunkts durch Subtrahieren des zweiten und dritten Spurfehlersignals detektiert wird.

9. System zur Detektierung einer Spurabweichung nach einem der vorhergehenden Ansprüche mit einer Einrichtung zur Verhinderung von Einschreiboperationen auf der Platte, während ein Spurabweichungszustand detektiert wird.

## Revendications

1. Système de détection d'erreur de suivi de piste dans un appareil d'enregistrement et reproduction optiques dans lequel l'enregistrement et la reproduction des données sont effectués en formant un point lumineux de faisceau sur un disque optique, le système comprenant:
- des moyens pour illuminer le disque avec un premier point lumineux de faisceau (SA) qui suit le centre d'une piste d'enregistrement de données;
- des moyens pour illuminer le disque avec des deuxième et troisième points lumineux de faisceau (SB, SC) à des positions qui sont décalées latéralement de la piste à partir du premier point lumineux de faisceau d'une distance prédéterminée du côté circonférentiel intérieur et du côté circonférentiel extérieur de la piste, respectivement; et
- des premier, deuxième et troisième photodétecteurs (1a, 1b, 1c) pour détecter la lumière réfléchie par les premier, deuxième et troisième points lumineux de faisceau, respectivement,
caractérisé par des moyens (3a, 4a, 3b, 4b, 4c) pour obtenir des premier, deuxième et troisième signaux d'erreur de suivi de piste à partir des premier, deuxième et troisième photodétecteurs, respectivement;
- des moyens (3c, 3d) pour additionner les premier et deuxième signaux d'erreur de suivi de piste et pour additionner les premier et troisième signaux d'erreur de suivi de piste pour former des premier et deuxième signaux composites d'erreur de suivi de piste, respectivement: et
- des moyens (5a, 5b, 6) pour détecter l'état d'erreur de suivi de piste, dans lequel le premier point lumineux de faisceau est écarté de la piste, sur la base des polarités des premier et deuxième signaux composites d'erreur de suivi de piste.

2. Système de détection d'erreur de suivi de piste selon la revendication 1, dans lequel les deuxième et troisième points lumineux de faisceau sont formés à des positions qui sont décalées par rapport au premier point lumineux de faisceau d'un quart du pas des pistes.

3. Système de détection d'erreur de suivi de piste selon la revendication 2, dans lequel des moyens (3a, 4a, 3b) sont prévus pour éliminer une composante continue comprise dans le premeir signal d'erreur de suivi de piste en additionnant le deuxième signal d'erreur de suivi de piste et le troisième signal d'erreur de suivi de piste et en soustrayant un signal obtenu en multipliant par un coefficient prédéterminé le signal résultant issu du premier signal d'erreur de suivi de piste.

4. Système de détection d'erreur de suivi de piste selon la revendication 1, dans lequel les deuxième et troisième points lumineux de faisceau sont formés à des positions qui sont écartées du premier point lumineux de faisceau d'un tiers du pas des pistes.

5. Système de détection d'erreur de suivi de piste selon l'une quelconque des revendications précédentes, dans lequel les moyens pour obtenir comprennent des moyens (4a, 4b, 4c) pour multiplier par des coefficients prédéterminés respectifs les deuxième et troisième signaux d'erreur de suivi de piste et le premier signal d'erreur de suivi de piste.

6. Système de détection d'erreur de suivi de piste selon l'une quelconque des revendications précédentes, dans lequel les moyens de détection détectent les polarités des premier et deuxième signaux composites d'erreur de suivi de piste en produisant des signaux de détection respectifs en détectant des points de passage par zéro des premier et deuxième signaux composites d'erreur de suivi de piste, respectivement, et en soumettant à une opération logique ET un des signaux de détection avec l'inverse logique de l'autre signal.

7. Système de détection d'erreur de suivi de piste selon l'une quelconque des revendications précédentes, dans lequel les moyens de détection détectent les polarités des premier et deuxième signaux composites d'erreur de suivi de piste en produisant des signaux de détection respectifs en détectant des points de passage par zéro des premier et deuxième signaux composites d'erreur de suivi de piste, respectivement, et en soumettant à une opération logique OU un des signaux de détection avec l'inverse logique de l'autre signal.

8. Système de détection d'erreur de suivi de piste selon l'une quelconque des revendications précédentes, dans lequel, en utilisation, le sens de déplacement du point lumineux de faisceau est détecté en soustrayant les deuxième et troisième signaux d'erreur de suivi de piste.

9. Système de détection d'erreur de suivi de piste selon l'une quelconque des revendications précédentes, comportant des moyens pour inhiber les opérations d'écriture sur le disque pendant qu'un état d'erreur de suivi de piste est détecté.
